# FASCICULE DE BREVET EUROPEEN

(11) **EP 2 829 312 B1**
(45) Date de publication et mention de la délivrance du brevet: **07.06.2023**
(21) Numéro de dépôt: 14178183.1
(22) Date de dépôt: 23.07.2014
(51) Int. Cl.: B01D 53/14

(54) **Dispositif de captage de gaz acide contenu dans des fumées de combustion**
Vorrichtung zur Abscheidung von in Abgasen enthaltenem saurem Gas
Device for capturing acid gas contained in combustion fumes

(30) Priorité: 23.07.2013 FR 1357262
(43) Date de publication de la demande: 28.01.2015
(73) Titulaire: Electricité de France, 75008 Paris (FR)
(72) Inventeur: Le Moullec, Yann, 78290 Croissy sur Seine (FR)
(74) Mandataire: Regimbeau

(56) Documents cités:
- EP-A1- 2 444 141
- CA-A1- 2 814 354
- CA-A1- 2 814 470
- DE-A1-102010 010 540
- US-A1- 2009 151 566
- US-A1- 2011 072 820
- US-A1- 2012 096 865

## Description

### Domaine de l'invention

Le domaine de l'invention est celui du captage de gaz acide contenu dans des fumées de combustion d'une centrale thermique comprenant un circuit de vapeur, en particulier d'une centrale thermique à flamme.

### Etat de l'art

Il existe des dispositifs et des procédés de captage de gaz acide contenu dans des fumées de combustion d'une centrale thermique.

Les techniques de captage de gaz acide, en particulier de dioxyde de carbone, qui ont atteint la plus grande maturité reposent sur l'absorption chimique du gaz acide dans un fluide de captation comprenant un solvant, en particulier un solvant à base amine. Lors de la mise en oeuvre de telles techniques, il est nécessaire de régénérer le fluide de captation utilisé. Cependant une telle étape de régénération nécessite un grand apport de chaleur. Cette chaleur provient en général d'une forte condensation de vapeur basse pression du circuit vapeur. Il est nécessaire de condenser une partie importante de la vapeur basse pression, typiquement entre 30 et 60 %.

Les documents US 2012/096865, EP 2444141 et US 2011/072820 divulguent un dispositif (respectivement un procédé) de captage d'un gaz acide contenu dans des fumées de combustion d'une centrale thermique comprenant un circuit de vapeur.

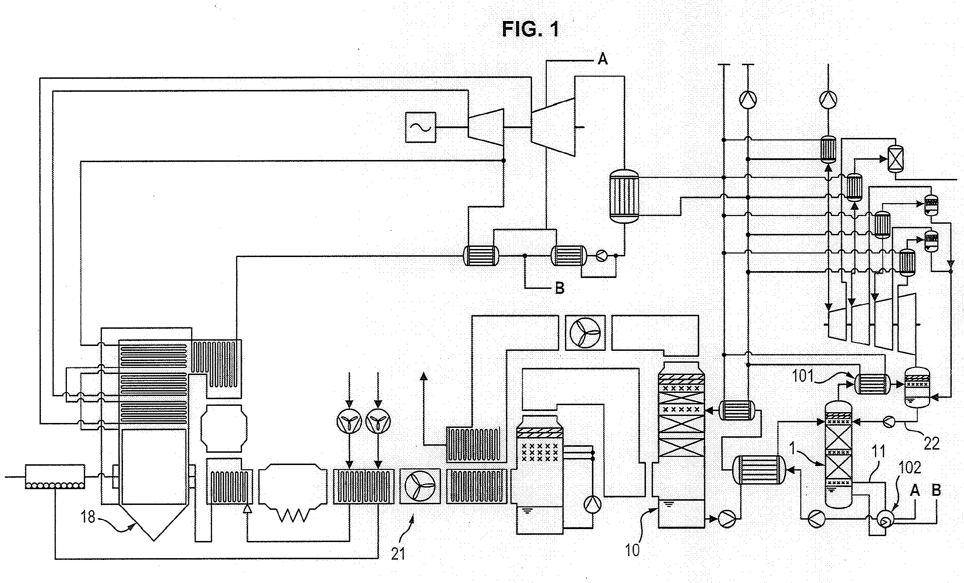

En référence à la figure 1, il est décrit un schéma synthétique d'une centrale électrique comprenant un dispositif de captage de gaz acide selon une telle technique connue. Les fumées issues de la combustion d'une chaudière 18 sont acheminées via un système de conduites 21 à des moyens d'absorption 10 d'au moins un gaz acide. L'absorption du gaz acide est réalisée par mise en contact des fumées avec un fluide de captation comprenant un solvant, le fluide de captation étant pauvre en gaz acide. Le fluide de captation issu des moyens d'absorption 10 est ainsi le fluide de captation enrichi en gaz acide.

Le dispositif comprend un régénérateur 1, dans lequel sont mis en contact le fluide de captation enrichi en gaz acide et la vapeur d'un fluide de régénération. Cette vapeur du fluide de régénération est introduite pour régénérer le fluide de captation dans le régénérateur 1 par des moyens d'introduction 11.

Le dispositif comprend des moyens de condensation 101 disposés en tête du régénérateur 1. Les moyens de condensation sont adaptés pour condenser le fluide gazeux issu du régénérateur en un milieu contenant une phase liquide du fluide de régénération et une phase gazeuse riche en gaz acide. La phase liquide du fluide de régénération est réintroduite dans le régénérateur par des moyens de retour 22 du fluide de régénération. Ainsi le gaz acide est isolé dans la phase gazeuse riche en gaz acide.

La chaleur nécessaire au régénérateur 1 est fournie au fluide de régénération par une vapeur basse pression prélevée sur le circuit vapeur de la centrale, via une connexion fluidique représentée par les deux flèches référencées A, et avec laquelle le fluide de régénération est en échange thermique dans le rebouilleur 102. La vapeur prélevée s'est partiellement condensée dans le rebouilleur 102, formant ainsi un fluide qui est réinjecté via une connexion fluidique représentée par les deux flèches référencées B dans le circuit vapeur de la centrale.

De telles techniques induisent une forte perte de rendement du cycle de la centrale. Les pertes induites par la condensation de la vapeur basse pression vont en général de 7 à 9 % du rendement. A ces pertes s'ajoutent les pertes liées aux consommations des auxiliaires de la capture du gaz acide. Les auxiliaires comprennent par exemple un système de pompage du fluide de captation, un ventilateur, ou un compresseur du gaz acide. Les pertes liées aux auxiliaires s'élèvent en général à environ 3 % du rendement du cycle vapeur. Ces importantes pertes de rendement sont fortement pénalisantes en termes de rentabilité de la centrale où de telles techniques sont mises en oeuvre.

Ces inconvénients limitent les possibilités de mise en place d'un dispositif de captage de gaz acide couplé à un circuit vapeur.

Une possibilité est de réduire la pression de la vapeur nécessaire au rebouilleur. L'utilisation d'une vapeur à pression moindre permet de réduire l'impact du prélèvement de vapeur sur le rendement de la centrale. Cependant une telle possibilité nécessite une augmentation importante de la taille des équipements du dispositif, du fait d'une pression de fonctionnement plus basse, et implique un travail de compression plus important pour fournir le gaz acide à un réseau de transport de gaz acide.

Une autre possibilité est de modifier le cycle vapeur en vue d'optimiser la quantité de vapeur nécessaire au cycle. Cependant une telle possibilité implique généralement une augmentation de la complexité de la chaudière et du circuit vapeur.

### Résumé de l'invention

Un but de l'invention est de fournir un dispositif de captage de gaz acide contenu dans des fumées de combustion d'une centrale thermique comprenant un circuit de vapeur qui ne présente pas ces inconvénients. En particulier, un but de l'invention est de fournir un tel dispositif qui réduise la perte de rendement associée à la régénération du CO2.

A cet effet, il est prévu un dispositif de captage d'un gaz acide contenu dans des fumées de combustion d'une centrale thermique comprenant un circuit de vapeur, le dispositif comprenant :
- des moyens d'absorption du gaz acide par mise en contact des fumées avec un fluide de captation pauvre en gaz acide,
- un régénérateur dans lequel sont mis en contact le fluide de captation enrichi en gaz acide et de la vapeur d'un fluide de régénération introduite afin de régénérer le fluide de captation,
- des premiers moyens d'introduction de la vapeur du fluide de régénération dans le régénérateur,
- des premiers moyens de condensation en un milieu contenant une phase liquide du fluide de régénération et une phase gazeuse riche en gaz acide, disposés en tête dudit régénérateur,
- des moyens de séparation de la phase liquide du fluide de
régénération et de la phase gazeuse riche en gaz acide, dans lequel :
- la vapeur du fluide de régénération introduite afin de régénérer le fluide de captation est une vapeur surchauffée,
- le régénérateur comprend des moyens de contact entre le fluide de captation enrichi en gaz acide et la vapeur surchauffée du fluide de régénération, limitant le temps de contact entre les deux de telle sorte qu'on maintienne sensiblement le débit de vapeur du fluide de régénération,
- les premiers moyens de condensation sont des moyens d'un premier évapo-condenseur et sont en échange thermique avec de premiers moyens d'évaporation du premier évapo-condenseur, qui évaporent un fluide de travail, et
- le dispositif comprend des premiers moyens de réintroduction de la vapeur du fluide de travail ainsi obtenue dans une première turbine,
- les premiers moyens d'introduction de la vapeur de fluide de régénération sont des premiers moyens d'introduction de la vapeur depuis :
   o la première turbine, la première étant une turbine dudit circuit de vapeur ou
   o une deuxième turbine, la deuxième turbine étant une turbine dudit circuit de vapeur.

L'invention est avantageusement complétée par les caractéristiques suivantes, prises seules ou en une quelconque de leurs combinaisons techniquement possibles :
- les moyens d'absorption sont adaptés pour :
   o évaporer un excédent de fluide de régénération présent dans le fluide de captation, et
   o mélanger ledit excédent de fluide de régénération évaporé avec la phase liquide du fluide de régénération en aval des premiers moyens de condensation ;
- les premiers moyens de condensation comprennent des condenseurs partiels adaptés pour limiter la proportion d'impuretés dans la phase liquide de fluide de régénération condensé par les premiers moyens de condensation, au moins une portion liquide de fluide de régénération partiellement condensé par un condenseur partiel étant recyclée dans le régénérateur ;
- des moyens de compression de la phase gazeuse riche en gaz acide, en échange thermique avec le premier évapo-condenseur afin :
   o d'évaporer au moins partiellement le fluide de travail, et/ou
   o d'évaporer au moins partiellement le fluide de régénération en amont du régénérateur ;
- des moyens de détente brusque du fluide de travail en amont des premiers moyens d'évaporation, une phase vapeur du fluide de travail détendu étant introduite dans la turbine par les premiers moyens de réintroduction, et une phase liquide du fluide de travail détendu étant réintroduit dans un train de préchauffe ;
- des moyens de surchauffe adaptés pour resurchauffer le fluide de travail en aval du premier évapo-condenseur ;
- le fluide de captation comprend une solution aqueuse d'amine ;
- le fluide de travail et/ou le fluide de régénération est de l'eau ;
- des moyens de purification de la phase liquide aqueuse séparée, situés en aval des moyens de séparation ;
- les moyens de purification comprennent un système de filtration sur charbon actif et/ou un système de résine échangeuse d'ions, et/ou un système d'électrodialyse ;
- le fluide de régénération et le fluide de travail sont formés d'un fluide de fonctionnement du circuit de vapeur, la ou les turbine(s) appartenant au circuit de vapeur ;
- la première turbine appartient à un circuit de fluide de travail fermé séparé du circuit de vapeur, le circuit de fluide de travail formant un cycle de Rankine organique, et le dispositif comprend des seconds moyens de réintroduction du fluide de régénération séparé au niveau d'une chaudière du circuit de vapeur ;
- le premier évapo-condenseur ou le deuxième évapo-condenseur est une colonne mettant directement en contact le fluide des premiers moyens de condensation et le fluide des premiers moyens d'évaporation.

Selon un autre aspect, l'invention concerne une centrale thermique comportant un circuit de vapeur et une chaudière, la centrale comprenant un tel dispositif.

Selon encore un autre aspect, l'invention concerne un procédé de captage d'un gaz acide contenu dans des fumées de combustion d'une centrale thermique comprenant un circuit de vapeur, le procédé comprenant des étapes consistant en :
- l'absorption chimique du gaz acide par mise en contact des fumées avec un fluide de captation pauvre en gaz acide,
- la régénération du fluide de captation par mise en contact du fluide de captation enrichi en gaz acide et de la vapeur d'un fluide de régénération introduite afin de régénérer le fluide de captation,
- l'introduction de la vapeur du fluide de régénération,
- la condensation d'un milieu contenant du fluide de régénération et des gaz acides après la régénération, en un milieu contenant une phase liquide du fluide de régénération et une phase gazeuse riche en gaz acide,
- la séparation de la phase liquide du fluide de régénération et de la phase gazeuse riche en gaz acide,
dans lequel :
- la vapeur du fluide de régénération introduite afin de régénérer le fluide de captation est une vapeur surchauffée,
- la régénération comprend une limitation du temps de contact entre le fluide de captation enrichi en gaz acide et la vapeur du fluide de régénération de telle sorte qu'on maintienne sensiblement le débit de vapeur du fluide de régénération,
- la condensation est réalisée en échange thermique avec une évaporation d'un fluide de travail de turbine, et
- le procédé comprend en outre la réintroduction dans une première turbine de la vapeur du fluide de travail obtenue par l'évaporation,
- dans lequel l'introduction de la vapeur du fluide de régénération est l'introduction de la vapeur depuis :
   o la première turbine, la première étant une turbine dudit circuit de vapeur ou
   o une deuxième turbine, la deuxième turbine étant une turbine dudit circuit de vapeur.

### Brève description des figures

D'autres caractéristiques et avantages de l'invention apparaîtront lors de la description ci-après d'un mode de réalisation. Aux dessins annexés :
- la figure 1, déjà décrite, représente schématiquement une centrale thermique comprenant un dispositif de captage de gaz acide selon l'art antérieur,
- la figure 2a représente schématiquement une centrale thermique comprenant un dispositif de captage de gaz acide selon un premier exemple de mode de réalisation de l'invention,
- la figure 2b représente schématiquement le dispositif de captage de gaz acide selon le premier exemple de mode de réalisation de l'invention
- la figure 3 représente schématiquement un dispositif de captage de gaz acide selon un deuxième exemple de mode de réalisation de l'invention
- la figure 4 représente schématiquement un dispositif de captage de gaz acide selon un troisième exemple de mode de réalisation de l'invention,
- la figure 5 représente schématiquement un dispositif de captage de gaz acide selon un quatrième exemple de mode de réalisation de l'invention,
- la figure 6 représente schématiquement un dispositif de captage de gaz acide selon un cinquième exemple (non conforme à cette invention),
- la figure 7 représente les étapes d'un procédé de captage de gaz acide selon un autre exemple de mode de réalisation de l'invention.

### Description détaillée de l'invention

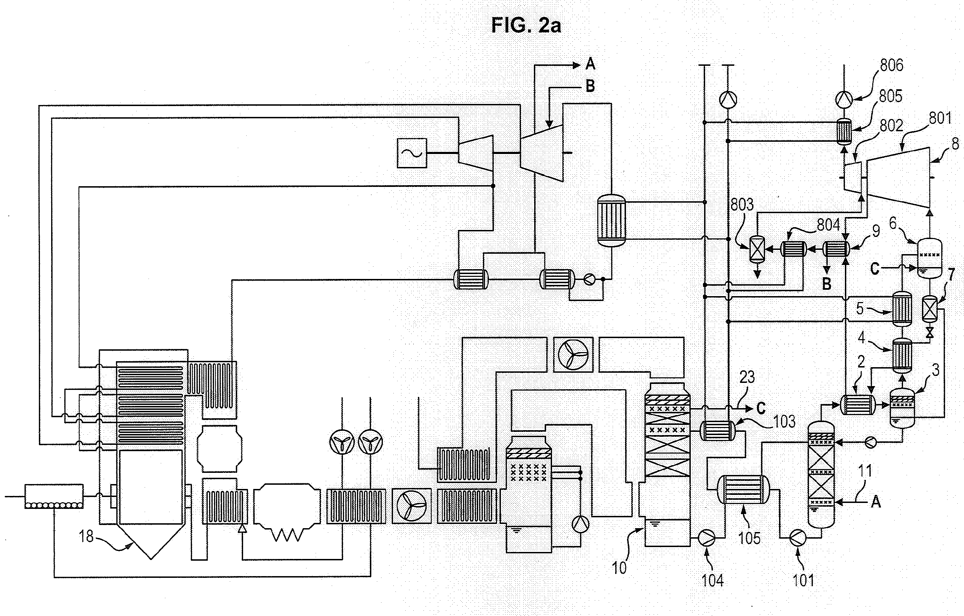

En référence aux figures 2a, 2b, et 3 à 6, il est décrit un dispositif de captage d'un gaz acide contenu dans des fumées de combustion d'une centrale thermique comprenant un circuit de vapeur. Le gaz acide est par exemple du dioxyde de carbone.

Le dispositif de captage est un dispositif adapté pour capter un gaz acide contenu dans des fumées de combustion, telles que des fumées de combustion d'une centrale thermique. Le dispositif de captage est par exemple dimensionné ou configuré pour capter un tel gaz acide.

Sur l'ensemble des figures, les éléments fléchés A, B et C représentent des connexions fluidiques d'un élément donné vers un autre.

### 1. Centrale thermique

La centrale est par exemple une centrale thermique à flamme. Le circuit de vapeur ou circuit vapeur de la centrale thermique comprend au moins une turbine basse pression. Par basse pression, on entend par exemple une pression comprise entre 2 et 5 bars. Le circuit vapeur peut comprendre plusieurs turbines basse pression. Le circuit vapeur peut comprendre une ou plusieurs turbine(s) haute pression. Le circuit vapeur peut comprendre une ou plusieurs turbine(s) pression intermédiaire. Les turbines sont par exemples disposées le long d'un arbre d'entraînement. Le circuit vapeur peut comprendre des échangeurs dans lesquels la vapeur passe entre chaque turbine, les échangeurs permettant de fournir de la chaleur au fluide de travail issu des turbines basse pression avant son évaporation dans une chaudière 18.

Le circuit de vapeur peut ainsi former un circuit fluidique de la vapeur dans la centrale thermique assurant le fonctionnement des turbines de la centrale thermique et donc la production d'énergie de la centrale thermique.

La chaudière 18 produit des fumées qui résultent de la combustion d'un combustible. Il peut s'agir de tout combustible d'une centrale thermique, en particulier d'une centrale thermique à flamme, dont les fumées contiennent au moins un gaz acide que le dispositif de captage vise à capter. Ainsi le combustible est par exemple du charbon ou un hydrocarbure.

### 2. Dispositif de captage de gaz acide

### Moyens d'absorption

Le dispositif de captage comprend des moyens d'absorption 10 du gaz acide. Les fumées issues de la chaudière 18 sont acheminées vers les moyens d'absorption 10. En amont des moyens d'absorption 10 peuvent être disposés des moyens de refroidissement, par exemple un refroidisseur, et/ou des moyens d'aération des fumées, et/ou des moyens de dépollutions des fumées. Au niveau des moyens d'absorption 10, les fumées sont mises en contact avec un fluide de captation comprenant un solvant, le fluide de captation étant pauvre en gaz acide adapté pour absorber le gaz acide. Les moyens d'absorption 10 comprennent par exemple un absorbeur. L'absorbeur comprend par exemple une colonne à plusieurs tronçons.

Les moyens d'absorption 10 d'un gaz acide sont des moyens adaptés pour réaliser l'absorption d'un gaz acide. Les moyens d'absorption 10 sont adaptés pour assurer la mise en contact des fumées avec un fluide pauvre en gaz acide, pour permettre l'absorption du gaz acide par le fluide de captation pauvre en gaz acide. Les moyens d'absorption 10 sont par exemple dimensionnés ou configurés pour permettre une telle absorption du gaz acide.

Les moyens d'absorption 10 comprennent par exemple un absorbeur.

Le fluide de captation comprend ou est par exemple un solvant aqueux. Le fluide de captation présente avantageusement une faible énergie de régénération. Le fluide de captation comprend par exemple des sels potassiques de carbonate. Le fluide de captation comprend ou est par exemple une solution aqueuse d'amine, formant solvant, par exemple une solution aqueuse de méthyl-diéthanolamine. Alternativement, ou en complément, le fluide de captation présente avantageusement une faible volatilité. Le fluide de captation peut comprendre de la pipérazine, ou des sels aminoacides.

Le dispositif est adapté pour fonctionner avec un tel fluide de captation.

Les fumées dont le gaz acide a été absorbé peuvent être évacuées, par exemple en tête de l'absorbeur. Les fumées évacuées peuvent subir d'autres traitements.

### Régénérateur

Le dispositif de captage comprend un régénérateur 1 dans lequel sont mis en contact le fluide de captation enrichi en gaz acide et de la vapeur d'un fluide de régénération introduite afin de régénérer le fluide de captation. Le dispositif comprend ainsi des premiers moyens d'introduction 11 de la vapeur du fluide de régénération dans le régénérateur 1, agencés de telle sorte que la vapeur du fluide de régénération introduite afin de régénérer le fluide de captation est une vapeur surchauffée. La vapeur surchauffée est injectée dans le régénérateur de sorte à minimiser le transfert thermique et maximiser le transfert de matière. La vapeur surchauffée a préférentiellement une pression comprise entre 0,3 et 10 bar. La vapeur surchauffée a préférentiellement subi une surchauffe de + 20 à + 70 °C. Le fluide de régénération peut être de l'eau.

Par régénérateur on entend un appareil dans lequel un composé chimique est régénéré, de façon à rétablir son activité.

Le régénérateur est adapté pour mettre en contact le fluide de captation enrichi en gaz acide et de la vapeur d'un fluide de régénération, de sorte qu'une telle mise en contact est réalisée à l'intérieur du régénérateur. Le régénérateur est adapté pour que la vapeur d'un fluide de régénération soit introduite à l'intérieur du régénérateur, de sorte à régénérer le fluide de captation par une telle mise en contact. Le régénérateur est par exemple configuré ou dimensionné pour permettre dans le régénérateur une telle mise en contact.

Le dispositif comprend ainsi des premiers moyens d'introduction 11 adaptés pour introduire de la vapeur du fluide de régénération dans le régénérateur 1, agencés de telle sorte que la vapeur du fluide de régénération introduite afin de régénérer le fluide de captation est une vapeur surchauffée.

Les premiers moyens d'introduction sont par exemple configurés ou dimensionnés pour permettre une telle introduction et un tel agencement.

Les premiers moyens d'introduction 11 comprennent par exemple un élément d'introduction, par exemple un conduit d'introduction.

Le dispositif est adapté pour fonctionner avec un tel fluide de régénération.

De plus, le régénérateur 1 comprend des moyens de contact entre le fluide de captation enrichi en gaz acide et la vapeur surchauffée du fluide de régénération. Les moyens de contact sont adaptés pour limiter le temps de contact entre le fluide de captation enrichi en gaz acide et la vapeur surchauffée du fluide de régénération de telle sorte qu'on maintienne sensiblement le débit de vapeur du fluide de régénération. Le temps de contact entre le fluide de captation enrichi en gaz acide et la vapeur du fluide de régénération ne doit pas être trop grand pour ne pas condenser trop de vapeur de fluide de régénération dans le fluide de captation. Les moyens de contact comprennent par exemple une colonne à garnissage, une colonne à bulle ou une colonne à spray dont le rapport hauteur/diamètre est optimisé pour cet usage.

Les moyens de contact entre le fluide de captation enrichi en gaz acide et la vapeur surchauffée du fluide de régénération sont des moyens adaptés pour mettre en contact le fluide de captation enrichi en gaz acide et la vapeur surchauffée du fluide de régénération. Les moyens de contact entre le fluide de captation enrichi en gaz acide et la vapeur surchauffée du fluide de régénération sont par exemple configurés ou dimensionnés pour permettre une telle mise en contact.

La limitation du temps de contact décrite est ainsi obtenue par exemple par l'agencement et/ou le dimensionnement du dispositif de captage, en particulier des éléments constitutifs du dispositif de captage, en particulier du régénérateur et/ou des éléments connectés fluidiquement au régénérateur. La limitation du temps de contact est par exemple obtenue notamment par le dimensionnement de la colonne de garnissage et/ou par le choix de valeurs de variables d'état des fluides circulant dans le dispositif.

Le régénérateur 1 peut comprendre une colonne à garnissages multiples et/ou à plateaux.

Le fluide en bas du régénérateur, comprenant une proportion importante de fluide de captation pauvre en gaz acide, peut être réintroduit dans les moyens d'absorption 10, par des moyens comprenant par exemple une pompe 101 et/ou un système de pulvérisation par rampe (non représenté). Le fluide de captation pauvre en gaz acide peut ainsi être réintroduit dans les moyens d'absorption 10. Avant d'être réintroduit dans les moyens d'absorption 10, le fluide issu du bas du régénérateur peut être refroidi par des moyens de refroidissement dédiés, par exemple un refroidisseur 103 dans lequel le fluide issu du bas du régénérateur 1 est en échange thermique avec une source froide, par exemple une source froide d'un circuit d'eau extérieur.

Par symétrie, et pour permettre de réintroduire dans le régénérateur le fluide de régénération et/ou le fluide de travail ainsi introduit(s) dans les moyens d'absorption 10, le fluide en bas des moyens d'absorption 10 peut être introduit dans le régénérateur 1, par exemple depuis un laveur des moyens d'absorption ou un étage de lavage, par des moyens comprenant une pompe 104.

Pour améliorer les économies de chaleur, un échangeur 105 peut être disposé de telle sorte que le fluide issu du bas du régénérateur 1 transfère une partie de sa chaleur au fluide issu du bas des moyens d'absorption 10.

### Premiers moyens de condensation

Le dispositif comprend un premier évapo-condenseur. Le premier évapo-condenseur comprend des premiers moyens de condensation en un milieu contenant une phase liquide du fluide de régénération et une phase gazeuse riche en gaz acide, disposés en tête dudit régénérateur 1. Ainsi le fluide provenant du régénérateur 1, et comprenant le fluide de régénération et le gaz riche en gaz acide est-il séparé entre une phase liquide et une phase gazeuse en sortie des premiers moyens de condensation.

Les premiers moyens de condensation sont adaptés pour permettre une condensation en un milieu contenant une phase liquide du fluide de régénération et une phase gazeuse riche en gaz acide. Les premiers moyens de condensation sont par exemple configurés ou dimensionnés pour permettre une telle condensation.

Les premiers moyens de condensation comprennent par exemple un condenseur.

Les premiers moyens de condensation peuvent comprendre des condenseurs partiels 2, 3 et 4 adaptés pour limiter la proportion d'impuretés dans la phase liquide de fluide de régénération condensé par les premiers moyens de condensation. Au moins une portion liquide de fluide de régénération peut ainsi être partiellement condensée par un condenseur partiel, par exemple au niveau du ballon de condenseur partiel 3, afin d'être recyclée dans le régénérateur 1, par exemple par des moyens de retour 22. Le recyclage est par exemple facilité par une pompe 301. Les premiers moyens de condensation peuvent ainsi comprendre une succession d'échangeurs de chaleur 2, 4 séparés par le ballon de condenseur partiel 3.

Chaque condenseur partiel permet par exemple de condenser une partie de la portion du fluide de régénération condensée par les premiers moyens de condensation dans leur ensemble.

Le dispositif comprend des moyens de séparation 6 de la phase liquide du fluide de régénération et de la phase gazeuse riche en gaz acide. Les moyens de séparation 6 sont ainsi disposés en aval des premiers moyens de condensation.

En amont des moyens de séparation 6 peuvent être disposés des moyens de refroidissement dédiés, par exemple un refroidisseur 5 par une source froide d'un circuit d'eau extérieur.

Le dispositif peut comprendre en outre des moyens de purification 7 de la phase liquide aqueuse séparée. De tels moyens de purification 7 peuvent être situés en aval des moyens de séparation 6. Les moyens de purification 7 peuvent comprendre une pompe 701 disposée en amont d'un système de purification 702 en tant que tel. Un détendeur 703 peut être disposé en aval du système de purification 702. Le système de purification 702 peut comprendre une colonne à garnissage. Le système de purification 702 peut comprendre un système de filtration sur charbon actif et/ou un système de résine échangeuse d'ions, et/ou un système d'électrodialyse, et/ou tout autre système adapté.

Les moyens d'absorption 10 peuvent être adaptés pour évaporer un excédent de fluide de régénération présent dans le fluide de captation, et mélanger ledit excédent de fluide de régénération évaporé avec la phase liquide du fluide de régénération en aval des premiers moyens de condensation. La phase liquide du fluide de régénération a par exemple été séparée par les moyens de séparation 6 avant d'être mélangée à l'excédent de fluide de régénération. Alternativement, le mélange du fluide de l'excédent du fluide de régénération et de la phase liquide du fluide de régénération peut être réalisé au niveau des moyens de séparation 6. Le mélange peut être permis par des moyens de transfert de l'excédent de fluide 23 représentés en outre en figure 2a par les deux flèches référencées C, l'une issue des moyens d'absorption 10, l'autre dirigée vers les moyens de séparation 6. Le fluide de régénération en aval des premiers moyens de condensation peut être dans un état liquide.

Les moyens d'absorption 10 peuvent par exemple être adaptés pour permettre l'évaporation d'un excédent de fluide de régénération présent dans le fluide de captation lorsque le dispositif est en fonctionnement, et pour permettre le mélange dudit excédent de fluide de régénération évaporé avec la phase liquide du fluide de régénération en aval des premiers moyens de condensation lorsque le dispositif est en fonctionnement.

Ainsi, l'évaporation est par exemple permise par une enceinte dimensionnée à cet effet dans sa forme et sa taille, combinée à un élément permettant de chauffer l'intérieur de l'enceinte, et le mélange est par exemple obtenu par une structure permettant l'introduction par des conduits d'introduction des fluides à mélanger et leur maintien dans l'enceinte dans des conditions prédéfinies assurées par le contrôle des conditions internes à l'enceinte, par exemple par les moyens de chauffe.

### Premiers moyens d'évaporation

Le premier évapo-condenseur comprend des premiers moyens d'évaporation du premier évapo-condenseur, qui sont en échange thermique avec les premiers moyens de condensation. Les premiers moyens d'évaporation évaporent un fluide de travail. Le fluide de travail est adapté pour être turbiné après passage dans les premiers moyens d'évaporation. Le fluide de travail peut être un fluide de travail d'une turbine, en particulier d'une turbine basse pression. Le fluide de travail peut être de l'eau. Dans le cas où le fluide de travail est de l'eau, il est de préférence introduit dans les premiers moyens d'évaporation à une pression par exemple comprise entre 0,3 et 6 bar, par exemple d'environ 1 bar.

Le dispositif est adapté pour fonctionner avec un tel fluide de travail.

Le dispositif comprend des premiers moyens de réintroduction 13 de la vapeur du fluide de travail, ainsi obtenue par les moyens d'évaporation, dans une première turbine 14. La première turbine 14 peut être une turbine basse pression du circuit vapeur de la centrale thermique.

Ainsi, le rendement du cycle vapeur associé au circuit vapeur est amélioré car une quantité moindre de chaleur est nécessaire. En effet, la chaleur apportée sert à désorber le gaz acide, et non à chauffer le fluide de captation ou à faire bouillir le fluide de travail ou le fluide de régénération.

Le dispositif peut comprendre en outre des moyens de détente brusque (non représentés) du fluide de travail en amont des premiers moyens d'évaporation, une phase vapeur du fluide de travail détendu étant introduite dans la turbine par les premiers moyens de réintroduction, et une phase liquide du fluide de travail détendu étant réintroduit dans un train de préchauffe. Une telle détente brusque peut permettre notamment d'augmenter le titre vapeur du fluide de travail en sortie du premier évapo-condenseur.

Les moyens de détente brusque sont par exemple adaptés pour réaliser une détente brusque du fluide de travail en amont des premiers moyens d'évaporation, les moyens de détente brusque étant par exemple agencés pour permettre l'introduction d'une phase vapeur du fluide de travail détendu dans la turbine par les premiers moyens de réintroduction, et agencés pour permettre la réintroduction d'une phase liquide du fluide de travail détendu dans un train de préchauffe.

Les moyens de détente brusque comprennent par exemple un détendeur à détente brusque.

Le dispositif de captage peut comprendre des moyens de compression 8 de la phase gazeuse riche en gaz acide, en échange thermique avec le premier évapo-condenseur. Les moyens de compression 8 peuvent comprendre un train de compression comprenant des premiers moyens de compression 801 à une première pression, et des deuxièmes moyens de compression 802 à une seconde pression supérieure à la première pression. Les premiers moyens de compression 801 et les deuxièmes moyens de compression 802 peuvent par exemple être séparés par des moyens de séchage du gaz acide. Les moyens de séchage du gaz acide permettent par exemple de séparer de l'eau contenue dans le gaz acide et le gaz acide séché, ce dernier étant introduit dans les deuxièmes moyens de compression 802. L'eau contenue peut alors être transmise à un système de traitement de l'eau (non représenté). Les moyens de séchage peuvent comprendre un contenant 803 dans lequel est introduit le fluide issu des premiers moyens de compression 801. Les moyens de séchage peuvent comprendre en outre des moyens de refroidissement dédiés, par exemple un refroidisseur 804 dans lequel le fluide issu des premiers moyens de compression 801, ou alternativement du contenant 803 (alternative non représentée), est en échange thermique avec une source froide, par exemple une source froide d'un circuit d'eau extérieur. Un échangeur 9 peut être disposé entre les premiers moyens de compression 801 et les deuxièmes moyens de compression 802, de sorte que la chaleur issue des moyens de compression 8 permette d'évaporer au moins partiellement le fluide de travail, par exemple le fluide de travail en amont des moyens de réintroduction 13, par exemple en aval des premiers moyens d'évapo-condensation. Alternativement, ou en complément, la chaleur issue des moyens de compression 8 peut permettre d'évaporer au moins partiellement le fluide de régénération en amont du régénérateur 1 au moyen d'un échangeur (alternative non représentée).

En sortie du train de compression, par exemple en sortie des deuxièmes moyens de compression 802, le gaz acide, qui peut être dans un état supercritique, peut être refroidi par un refroidisseur 805 où le gaz acide est en échange thermique avec une source froide, par exemple une source froide d'un circuit d'eau extérieur.

Le gaz acide en sortie du train de compression peut être dirigé vers un réseau de transport du gaz acide, par exemple au moyen d'une pompe 806.

Les moyens de compression 8 de la phase gazeuse riche en gaz acide sont par exemple agencés de sorte à être en échange thermique avec le premier évapo-condenseur. Un tel échange peut être adapté pour permettre, lorsque le dispositif est en fonctionnement d'évaporer au moins partiellement le fluide de travail, et/ou d'évaporer au moins partiellement le fluide de régénération en amont du régénérateur.

Deux éléments sont en échange thermique lorsqu'ils sont adaptés pour permettre un échange de chaleur entre des fluides disposés dans chacun des éléments sans toutefois nécessiter le mélange des fluides.

Les moyens de compression comprennent par exemple un compresseur.

Les premiers moyens de condensation ayant permis de refroidir la phase gazeuse riche en gaz acide, et la phase gazeuse présentant moins de traces de fluide de régénération, il n'est pas nécessaire de coupler les moyens de compression 8 à de multiples condenseurs partiels associés à des ballons de condenseurs pour recueillir le fluide de refroidissement en vue de le réintroduire dans le régénérateur 1. De plus, la phase gazeuse a déjà subi ces opérations de condensation partielle et de refroidissement, ce qui facilite son traitement. Il est ainsi possible de récupérer des premiers condensats riches en fluide de captation, en particulier riches en solvant, et des condensats riches en fluide de régénération. Par ailleurs, la chaleur dissipée par la compression du gaz acide peut être utilisée pour augmenter encore le titre vapeur du flux de fluide de travail réintroduit par les premiers moyens de réintroduction 13.

Selon une alternative (non représentée), le premier évapo-condenseur peut être une colonne mettant directement en contact le fluide des premiers moyens de condensation et le fluide des premiers moyens d'évaporation.

Le premier évapo-condenseur peut être par exemple une colonne adaptée pour mettre directement en contact le fluide des premiers moyens de condensation et le fluide des premiers moyens d'évaporation. Le premier évapo-condenseur peut être par exemple une colonne configurée ou dimensionnée pour mettre directement en contact le fluide des premiers moyens de condensation et le fluide des premiers moyens d'évaporation.

### 3. Premier exemple de mode de réalisation

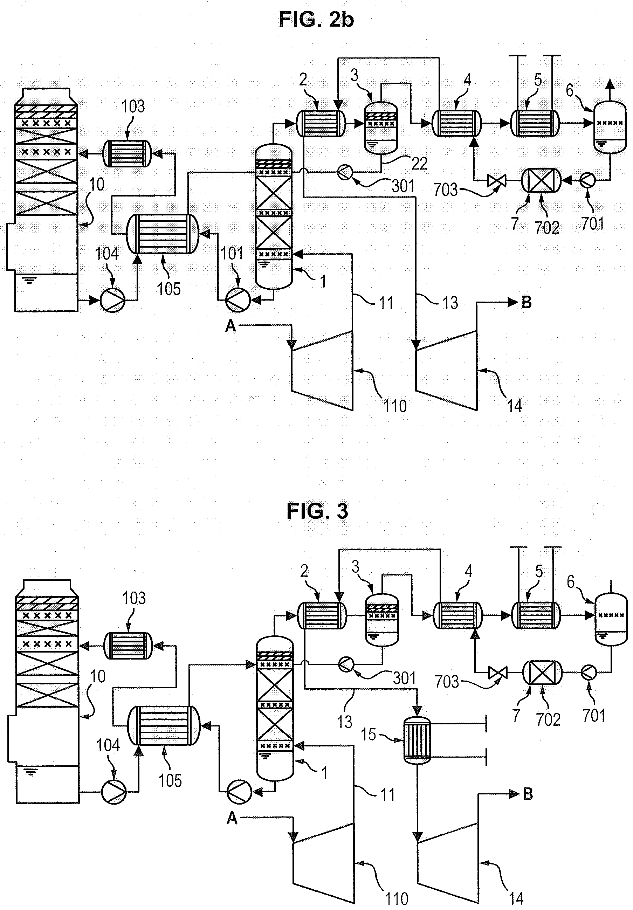

En référence aux figures 2a et 2b, les premiers moyens d'introduction 11 de la vapeur de fluide de régénération dans le régénérateur 1 peuvent être des premiers moyens d'introduction de la vapeur depuis une deuxième turbine 110, par exemple via une connexion fluidique représentée par les deux flèches référencées A, la deuxième turbine 110 pouvant être une turbine dudit circuit de vapeur de la centrale thermique.

Le fluide de régénération et le fluide de travail peuvent être formés d'un même fluide de fonctionnement du circuit de vapeur, la turbine 14 appartenant alors au circuit de vapeur.

Il est ainsi possible de régénérer le fluide de captation enrichi en gaz acide en le mettant en contact avec de la vapeur surchauffée issue du circuit vapeur de la centrale, puis de condenser et de refroidir le fluide issu du régénérateur 1 pour séparer le gaz acide du fluide de régénération/travail. Ainsi le fluide introduit par les premiers moyens d'introduction 11 depuis le circuit vapeur est réintroduit au circuit vapeur par les premiers moyens de réintroduction 13, en particulier après évaporation par les premiers moyens d'évaporation du premier évapo-condenseur. Il en résulte une amélioration du rendement du circuit vapeur de la centrale. Il est ainsi possible de s'affranchir de rebouilleur associé au régénérateur 1. En effet, le pincement du rebouilleur, à savoir la différence de température entre la température de condensation de la vapeur prélevée et la température du fluide de régénération en entrée du rebouilleur, implique un rendement strictement négatif au sens du deuxième principe de la thermodynamique. De plus, le fluide peut être directement réintroduit dans une turbine basse pression du circuit vapeur, sans nécessiter d'évaporation ou de surchauffe supplémentaire.

Selon un exemple de mise en oeuvre, le dispositif peut être couplé à une centrale à charbon super-critique de 1,05 GW net, dont les conditions de vapeur sont 270 bars / 600 °C / 60 bars / 600 °C, et de rendement PCI (Pouvoir Calorifique Inférieur) brut de 45,2 % avec un procédé de captage du dioxyde de carbone à la monoéthanolamine (35% massique). Le fluide de travail est de l'eau.

Selon un exemple de mise en oeuvre, la pression de fonctionnement du régénérateur 1 est de 2,7 bars. Le taux de captage du dioxyde de carbone est de 90% soit 700 t/h de dioxyde de carbone. La vapeur surchauffée du fluide de travail devant être injectée par les premiers moyens d'introduction 11 est prélevée par une turbine 14 basse pression à 2,7 bars et 194 °C. Le régénérateur 1 présente une colonne disposant d'une couche de garnissage structuré, par exemple de 250 m²/m³, de 3 mètres. En sortant en tête du régénérateur 1, le fluide comprenant le fluide de travail et le dioxyde de carbone est condensé à 130 °C, puis à 95 °C par les premiers moyens de condensation du premier évapo-condenseur, puis à 40°C par un refroidisseur.

Le dioxyde de carbone séparé par les moyens de séparation 6 est comprimé par les moyens de compression 8 jusqu'à 70 bars avant d'être déshydraté pour être ensuite comprimé jusqu'à 110 bars.

La phase liquide du fluide de travail séparée par les moyens de séparation 6 est traitée par des moyens de purification 7 de sorte à séparer le fluide de travail des impuretés telles que des traces de fluide de captation, les solvants ou les carbonates. Le fluide de travail purifié est détendu par un détendeur 703 à 1,5 bars puis introduit dans les premiers moyens d'évaporation pour acquérir un titre vapeur de 0,935 par exemple si le premier évapo-condenseur comprend plusieurs condenseurs partiels 2 et 4 et est en échange thermique avec les moyens de compression 8. La vapeur est alors réintroduite par les premiers moyens de réintroduction 13 dans le circuit vapeur de la centrale, par exemple via une connexion fluidique représentée par les deux flèches référencées B, où elle est mélangée à de la vapeur surchauffée à 1,5 bar. Il en résulte une vapeur légèrement surchauffée à 1,5 bar qui va alimenter une autre partie de la turbine basse pression.

La consommation énergétique pour des ventilateurs, des pompes de recirculation du fluide de captation, des moyens de compression 8 représentent environ 65 MW auquel il faut ajouter 2 MW pour une pompe d'extraction des premiers moyens de condensation, et 5 MW pour des moyens de purification 7 comprenant un système d'électrodialyse. La perte de production électrique sur le train de turbine est de 90 MW. Enfin le besoin d'eau de refroidissement accru nécessite une puissance de pompage de 5 MW supplémentaires. La perte totale de puissance électrique est donc de 102 MW soit une production nette de 0,95 GW et un rendement net de 38,2 %. La perte de rendement due à l'installation de l'unité de captage de dioxyde de carbone est de 7 %.

### 4. Deuxième exemple de mode de réalisation

En référence à la figure 3, les premiers moyens d'introduction 11 de la vapeur de fluide de régénération dans le régénérateur 1 peuvent être des premiers moyens d'introduction de la vapeur depuis une deuxième turbine 110, la deuxième turbine 110 pouvant être une turbine dudit circuit de vapeur de la centrale thermique.

Le fluide de régénération et le fluide de travail peuvent être formés d'un même fluide de fonctionnement du circuit de vapeur, la turbine 14 appartenant alors au circuit de vapeur.

Le dispositif peut comprendre des moyens de surchauffe 15 adaptés pour resurchauffer le fluide de travail en aval du premier évapo-condenseur, en particulier en aval des premiers moyens d'évaporation et avant réintroduction dans le circuit vapeur par les premiers moyens de réintroduction 13. Les moyens de surchauffe 15 peuvent fournir une chaleur issue de la chaudière 18 (non représentée figure 3). Ceci permet encore une amélioration supplémentaire du cycle vapeur. Ceci permet également de faire fonctionner le régénérateur 1 à plus haute pression et/ou de mieux valoriser la chaleur générée dans la chaudière 18.

Les moyens de surchauffe 15 sont par exemple disposés en aval du premier évapo-condenseur, de sorte à permettre la resurchauffe du fluide de travail issu du premier évapo-condenseur.

Les moyens de surchauffe 15 comprennent par exemple un resurchauffeur.

### 5. Troisième exemple de mode de réalisation

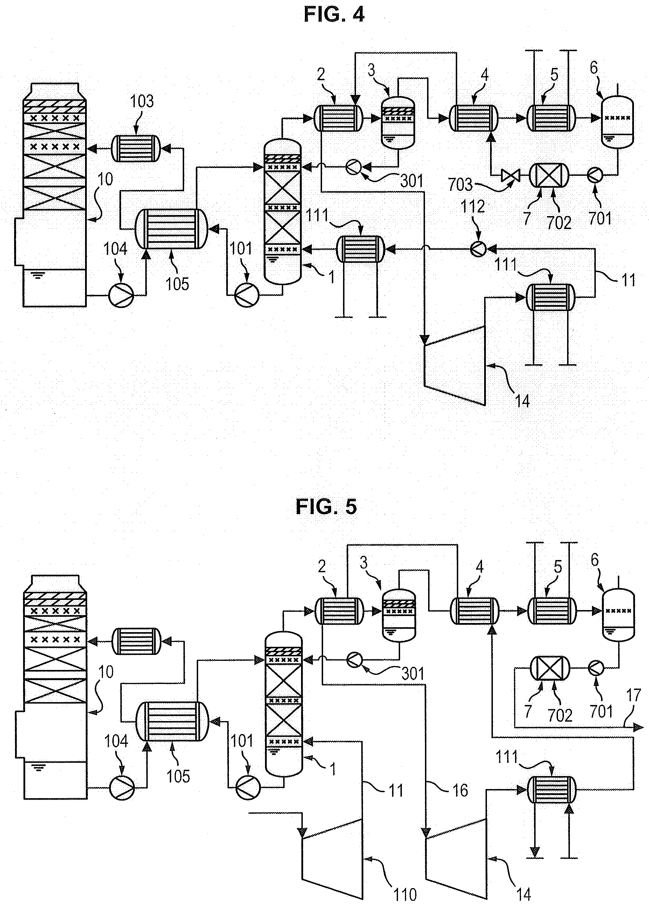

En référence à la figure 4, les premiers moyens d'introduction 11 de la vapeur de fluide de régénération dans le régénérateur 1 peuvent être des premiers moyens d'introduction de la vapeur depuis une turbine, cette pouvant alors être la première turbine 14 (représentée figure 4) ou la deuxième turbine 110 (non représentée figure 4), cette turbine pouvant alors être une turbine dudit circuit de vapeur de la centrale thermique.

Le fluide de régénération et le fluide de travail peuvent être formés d'un même fluide de fonctionnement du circuit de vapeur. La turbine 14 appartenant alors au circuit de vapeur.

Les premiers moyens d'introduction 11 peuvent comprendre un bouilleur 111 dédié ou plusieurs bouilleurs dédiés. Les premiers moyens d'introduction 11 peuvent comprendre une pompe 112 disposée entre les bouilleurs 111.

Le circuit de vapeur peut être un circuit de vapeur dédié au dispositif comprenant une première turbine 14 dédiée plus robuste. Il est ainsi possible d'éviter les problèmes induits par la présence de trace de fluide de captation, en particulier de solvant, ou d'ions carbonates dans les autres turbines de la centrale.

### 6. Quatrième exemple de mode de réalisation

En référence à la figure 5, les premiers moyens d'introduction 11 de la vapeur de fluide de régénération dans le régénérateur 1 peuvent être des premiers moyens d'introduction de la vapeur depuis une deuxième turbine 110, la deuxième turbine 110 étant alors une turbine dudit circuit de vapeur de la centrale thermique.

La première turbine 14 peut appartenir à un circuit de fluide de travail 16 fermé séparé du circuit de vapeur, le circuit de fluide de travail 16 formant ainsi un cycle de Rankine organique. Le premier évapo-condenseur peut ainsi agir en tant que source chaude du cycle de Rankine organique.

En outre, le dispositif peut comprendre des seconds moyens de réintroduction 17 du fluide de régénération séparé au niveau d'une chaudière 18 (non représentée figure 5) du circuit de vapeur.

Il est ainsi possible d'intégrer le dispositif à des installations de taille moindre, auxquelles le cycle de Rankine peut être adapté.

### 7. Cinquième exemple (non conforme à cette invention)

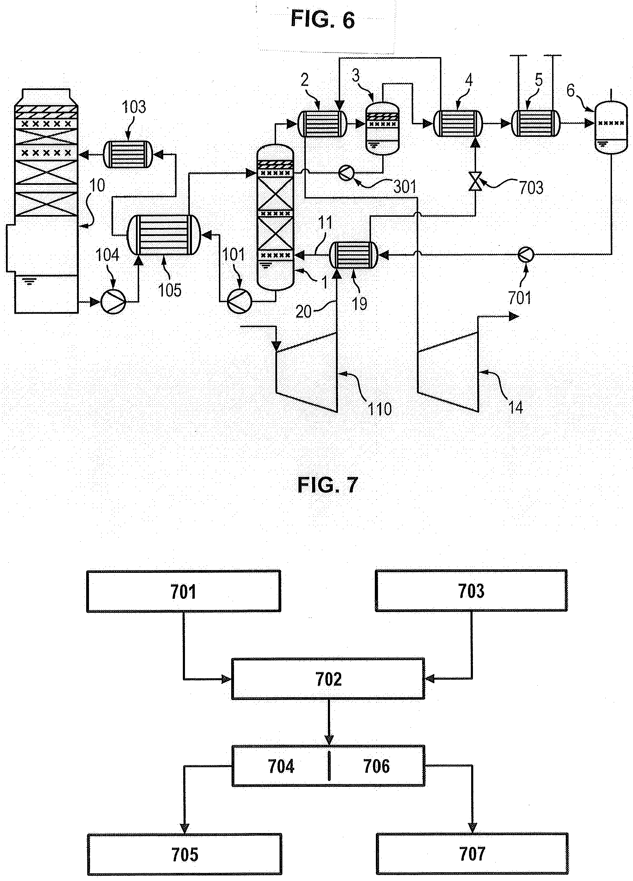

En référence à la figure 6, le dispositif peut comprendre un second évapo-condenseur 19. Le second évapo-condenseur 19 peut comprendre des seconds moyens de condensation du fluide de travail, situés en amont du premier évapo-condenseur, les seconds moyens de condensation étant adaptés pour condenser ledit fluide de travail. Le dispositif peut comprendre en outre des seconds moyens d'introduction 20 du fluide de travail depuis le circuit de vapeur de la centrale thermique dans les seconds moyens de condensation 19.

Le second évapo-condenseur 19 peut comprendre des seconds moyens d'évaporation qui évaporent le fluide de régénération en aval des moyens de séparation 6 et en amont des premiers moyens d'introduction 11, les seconds moyens d'évaporation étant alors en échange thermique avec les seconds moyens de condensation.

Ainsi le premier évapo-condenseur agit notamment comme un condenseur du régénérateur 1 alors que le deuxième évapo-condenseur agit notamment comme un bouilleur du régénérateur 1. Il est ainsi possible d'éviter une mise en contact directe de la vapeur et du fluide de captation.

En particulier, et selon une alternative non représentée, le second évapo-condenseur peut mettre directement en contact le fluide des seconds moyens de condensation et le fluide des seconds moyens d'évaporation.

Le second évapo-condenseur peut par exemple comprendre ainsi des seconds moyens d'évaporation qui sont adaptés pour évaporer le fluide de régénération en aval des moyens de séparation 6 et en amont des premiers moyens d'introduction 11, les seconds moyens d'évaporation étant adaptés pour être en échange thermique avec les seconds moyens de condensation. Les seconds moyens d'évaporation peuvent par exemple être configurés ou dimensionnés pour évaporer ainsi un tel fluide et/ou configurés ou dimensionnés pour être en un tel échange thermique.

Le second évapo-condenseur peut par exemple être adapté pour mettre directement en contact le fluide des seconds moyens de condensation et le fluide des seconds moyens d'évaporation. Le second évapo-condenseur peut par exemple être configuré ou dimensionné pour mettre directement en contact le fluide des seconds moyens de condensation et le fluide des seconds moyens d'évaporation.

### 8. Procédé de captage d'un gaz acide

En référence à la figure 7, il est décrit un procédé de captage d'un gaz acide contenu dans des fumées de combustion d'une centrale thermique comprenant un circuit de vapeur, le procédé comprenant des étapes consistant en :
- l'absorption 701 du gaz acide par mise en contact des fumées avec un fluide de captation pauvre en gaz acide,
- la régénération 702 du fluide de captation par mise en contact du fluide de captation riche en gaz acide et de la vapeur d'un fluide de régénération introduite afin de régénérer le fluide de captation,
- l'introduction 703 de la vapeur du fluide de régénération,
- la condensation 704 d'un milieu contenant du fluide de régénération et des gaz acides après la régénération, en un milieu contenant une phase liquide du fluide de régénération et une phase gazeuse riche en gaz acide,
- la séparation 705 de la phase liquide du fluide de régénération et de la phase gazeuse riche en gaz acide,
caractérisé en ce que :
- la vapeur du fluide de régénération introduite afin de régénérer le fluide de captation est une vapeur surchauffée,
- la régénération 702 comprend une limitation du temps de contact entre le fluide de captation enrichi en gaz acide et la vapeur du fluide de régénération de telle sorte qu'on maintienne sensiblement le débit de vapeur du fluide de régénération,
- la condensation 704 est réalisée en échange thermique avec une évaporation 706 d'un fluide de travail de turbine, et
- le procédé comprend en outre la réintroduction 707 dans une première turbine de la vapeur du fluide de travail obtenue par l'évaporation.

Les exemples de mode de réalisation décrits sont destinés à couvrir des variantes, des modifications et des équivalents, qui sont inclus dans l'esprit et l'étendue de l'invention telle que définie par les revendications jointes. En outre, dans la description détaillée des exemples de mode de réalisation, de nombreux détails spécifiques sont exposés afin de fournir une compréhension détaillée de l'invention revendiquée. Cependant, un homme du métier comprendra que divers modes de réalisation peuvent être mis en pratique sans ces détails spécifiques.

Bien que les caractéristiques et les éléments des présents exemples de mode de réalisation soient décrits dans les modes de réalisation en des combinaisons particulières, chaque caractéristique ou élément peut être utilisé seul sans les autres caractéristiques et éléments des modes de réalisation ou en diverses combinaisons avec ou sans d'autres caractéristiques et éléments présentés ici.

Cette description écrite utilise des exemples de l'objet présenté pour permettre à n'importe quel homme du métier de mettre en pratique la susdite, y compris en réalisant et en utilisant n'importe quels dispositifs ou systèmes et en appliquant n'importe quels procédés incorporés. L'étendue brevetable de l'objet est définie par les revendications, et peut comprendre d'autres exemples qui apparaîtront aux hommes du métier. Ces autres exemples sont destinés à être dans l'étendue des revendications.

## Revendications

1. Dispositif de captage d'un gaz acide contenu dans des fumées de combustion d'une centrale thermique comprenant un circuit de vapeur, le dispositif comprenant :
- des moyens d'absorption (10) du gaz acide par mise en contact des fumées avec un fluide de captation pauvre en gaz acide,
- un régénérateur (1) dans lequel sont mis en contact le fluide de captation enrichi en gaz acide et de la vapeur d'un fluide de régénération introduite afin de régénérer le fluide de captation,
- des premiers moyens d'introduction (11) de la vapeur du fluide de régénération dans le régénérateur (1),
- des premiers moyens de condensation (2, 3, 4) en un milieu contenant une phase liquide du fluide de régénération et une phase gazeuse riche en gaz acide, disposés en tête dudit régénérateur (1),
- des moyens de séparation (6) de la phase liquide du fluide de régénération et de la phase gazeuse riche en gaz acide, où,
- les premiers moyens de condensation (2, 3, 4) sont des moyens d'un premier évapo-condenseur et sont en échange thermique avec de premiers moyens d'évaporation du premier évapo-condenseur, qui évaporent un fluide de travail, et
- le dispositif comprend des premiers moyens de réintroduction (13, 16) de la vapeur du fluide de travail ainsi obtenue dans une première turbine (14),
**caractérisé en ce que** :
- la vapeur du fluide de régénération introduite afin de régénérer le fluide de captation est une vapeur surchauffée,
- le régénérateur (1) comprend des moyens de contact entre le fluide de captation enrichi en gaz acide et la vapeur surchauffée du fluide de régénération, limitant le temps de contact entre les deux de telle sorte qu'on maintienne sensiblement le débit de vapeur du fluide de régénération, et
dans lequel les premiers moyens d'introduction (11) de la vapeur de fluide de régénération sont des premiers moyens d'introduction de la vapeur depuis :
- la première turbine (14), la première (14) étant une turbine dudit circuit de vapeur ou
- une deuxième turbine (110), la deuxième turbine (110) étant une turbine dudit circuit de vapeur.

2. Dispositif selon la revendication 1, **caractérisé en ce que** les moyens d'absorption (10) sont adaptés pour :
- évaporer un excédent de fluide de régénération présent dans le fluide de captation, et
- mélanger ledit excédent de fluide de régénération évaporé avec la phase liquide du fluide de régénération en aval des premiers moyens de condensation (2, 3, 4).

3. Dispositif selon l'une quelconque des revendications 1 ou 2, **caractérisé en ce que** les premiers moyens de condensation (2, 3, 4) comprennent des condenseurs partiels adaptés pour limiter la proportion d'impuretés dans la phase liquide de fluide de régénération condensé par les premiers moyens de condensation (2, 3, 4), au moins une portion liquide de fluide de régénération partiellement condensé par un condenseur partiel (3) étant recyclée dans le régénérateur.

4. Dispositif selon l'une quelconque des revendications 1 à 3, comprenant des moyens de compression (8) de la phase gazeuse riche en gaz acide, en échange thermique avec le premier évapo-condenseur (2, 3, 4) afin :
- d'évaporer au moins partiellement le fluide de travail, et/ou
- d'évaporer au moins partiellement le fluide de régénération en amont du régénérateur (1).

5. Dispositif selon l'une quelconque des revendications 1 à 4, **caractérisé en ce que** le dispositif comprend des moyens de détente brusque du fluide de travail en amont des premiers moyens d'évaporation, une phase vapeur du fluide de travail détendu étant introduite dans la turbine par les premiers moyens de réintroduction, et une phase liquide du fluide de travail détendu étant réintroduit dans un train de préchauffe.

6. Dispositif selon l'une quelconque des revendications 1 à 5, **caractérisé en ce qu'**il comprend des moyens de surchauffe (15) adaptés pour resurchauffer le fluide de travail en aval du premier évapo-condenseur (2, 3, 4).

7. Dispositif selon l'une quelconque des revendications 1 à 6, **caractérisé en ce qu'**il comprend des moyens de purification (7) de la phase liquide aqueuse séparée, situés en aval des moyens de séparation (6).

8. Dispositif selon la revendication 7, **caractérisé en ce que** les moyens de purification (7) comprennent un système de filtration sur charbon actif et/ou un système de résine échangeuse d'ions, et/ou un système d'électrodialyse.

9. Dispositif selon l'une des revendications 1 à 8, **caractérisé en ce que** :
- la première turbine (14) appartient à un circuit de fluide de travail (16) fermé séparé du circuit de vapeur, le circuit de fluide de travail (16) formant un cycle de Rankine organique, et
- le dispositif comprend des seconds moyens de réintroduction (17) du fluide de régénération séparé au niveau d'une chaudière (18) du circuit de vapeur.

10. Dispositif l'une quelconque des revendications 1 à 9, **caractérisé en ce que** le premier évapo-condenseur (2, 3, 4) ou le deuxième évapo-condenseur est une colonne mettant directement en contact le fluide des premiers moyens de condensation et le fluide des premiers moyens d'évaporation.

11. Centrale thermique comportant un circuit de vapeur et une chaudière, **caractérisée en ce qu'**elle comprend un dispositif selon l'une des revendications précédentes.

12. Procédé de captage d'un gaz acide contenu dans des fumées de combustion d'une centrale thermique comprenant un circuit de vapeur, le procédé étant mis en oeuvre au moyen du dispositif selon l'une des revendications 1 à 10, le procédé comprenant des étapes consistant en :
- l'absorption (701) chimique du gaz acide par mise en contact des fumées avec un fluide de captation pauvre en gaz acide,
- la régénération (702) du fluide de captation par mise en contact du fluide de captation enrichi en gaz acide et de la vapeur d'un fluide de régénération introduite afin de régénérer le fluide de captation,
- l'introduction (703) de la vapeur du fluide de régénération,
- la condensation (704) d'un milieu contenant du fluide de régénération et des gaz acides après la régénération (702), en un milieu contenant une phase liquide du fluide de régénération et une phase gazeuse riche en gaz acide,
- la séparation (705) de la phase liquide du fluide de régénération et de la phase gazeuse riche en gaz acide, où
- la condensation (704) est réalisée en échange thermique avec une évaporation (706) d'un fluide de travail de turbine, et
- le procédé comprend en outre la réintroduction (707) dans une première turbine de la vapeur du fluide de travail obtenue par l'évaporation,
**caractérisé en ce que** :
- la vapeur du fluide de régénération introduite afin de régénérer le fluide de captation est une vapeur surchauffée,
- la régénération (702) comprend une limitation du temps de contact entre le fluide de captation enrichi en gaz acide et la vapeur du fluide de régénération de telle sorte qu'on maintienne sensiblement le débit de vapeur du fluide de régénération, et
dans lequel l'introduction (703) de la vapeur du fluide de régénération est l'introduction de la vapeur depuis :
- la première turbine (14), la première (14) étant une turbine dudit circuit de vapeur ou
- une deuxième turbine (110), la deuxième turbine (110) étant une turbine dudit circuit de vapeur.

## Patentansprüche

1. Vorrichtung zum Abscheiden von in Abgasen eines Heizkraftwerks enthaltenem saurem Gas, einen Dampfkreislauf umfassend, wobei die Vorrichtung umfasst:
- Mittel zum Absorbieren (10) des sauren Gases durch in-Kontakt-bringen der Abgase mit einer an saurem Gas armen Abscheideflüssigkeit,
- einen Regenerator (1), in dem die mit saurem Gas angereicherte Abscheideflüssigkeit und Dampf einer Regenrationsflüssigkeit in Kontakt gebracht werden, der eingeleitet wird, um die Abscheideflüssigkeit zu regenerieren,
- erste Mittel zum Einleiten (11) des Dampfes der Regenrationsflüssigkeit in den Regenerator (1),
- erste Kondensationsmittel (2, 3, 4) in einem Milieu, das eine flüssige Phase der Regenrationsflüssigkeit und eine mit saurem Gas angereicherte gasförmige Phase enthält, die im Kopf des Regenerators (1) angeordnet sind,
- Mittel zum Trennen (6) der flüssigen Phase der Regenrationsflüssigkeit und der mit saurem Gas angereicherten gasförmigen Phase, wobei
- die ersten Kondensationsmittel (2, 3, 4) Mittel eines ersten Verdampfer-Kondensators sind und im Wärmeaustausch mit ersten Verdampfungsmitteln des ersten Verdampfer-Kondensators sind, die eine Arbeitsflüssigkeit verdampfen, und
- die Vorrichtung erste Mittel zum Wiedereinleiten (13, 16) des so erhaltenen Dampfes der Arbeitsflüssigkeit in eine erste Turbine (14) umfasst,
**dadurch gekennzeichnet, dass**:
- der eingeleitete Dampf der Regenerationsflüssigkeit zum Regenerieren der Abscheideflüssigkeit überhitzter Dampf ist,
- der Regenerator (1) Kontaktmittel zwischen der mit saurem Gas angereicherten Abscheideflüssigkeit und dem überhitzten Dampf der Regenerationsflüssigkeit umfasst, die die Kontaktzeit zwischen den beiden derart einschränken, dass im Wesentlichen der Dampfdurchsatz der Regenerationsflüssigkeit beibehalten wird, und
wobei die ersten Mittel zum Einleiten (11) des Regenrationsflüssigkeitsdampfes erste Mittel zum Einleiten des Dampfes sind, aus:
- der ersten Turbine (14), wobei die erste Turbine (14) eine Turbine des Dampfkreislaufs ist, oder
- einer zweiten Turbine (110), wobei die zweite Turbine (110) eine Turbine des Dampfkreislaufs ist.

2. Vorrichtung nach Anspruch 1, **dadurch gekennzeichnet, dass** die Mittel zum Absorbieren (10) angepasst sind zum:
- Verdampfen eines Überschusses an Regenerationsflüssigkeit die in der Abscheideflüssigkeit vorhanden ist, und
- Mischen des verdampften Überschusses an Regenerationsflüssigkeit mit der flüssigen Phase der Regenerationsflüssigkeit stromabwärts der ersten Kondensationsmittel (2, 3, 4).

3. Vorrichtung nach einem der Ansprüche 1 oder 2, **dadurch gekennzeichnet, dass** die ersten Kondensationsmittel (2, 3, 4) Teilkondensatoren umfassen, die angepasst sind, um den Anteil an Verunreinigungen in der flüssigen Phase einer durch die ersten Kondensationsmittel (2, 3, 4) kondensierten Regenerationsflüssigkeit zu einschränken, wobei mindestens ein flüssiger Abschnitt einer durch einen Teilkondensator (3) teilweise kondensierten Regenerationsflüssigkeit in dem Regenerator recycelt wird.

4. Vorrichtung nach einem der Ansprüche 1 bis 3, Mittel zum Komprimieren (8) der mit saurem Gas angereicherten gasförmigen Phase umfassend, die in Wärmeaustausch mit dem ersten Verdampfer-Kondensator (2, 3, 4) ist, um:
- die Arbeitsflüssigkeit mindestens teilweise zu verdampfen, und/oder
- die Regenerationsflüssigkeit stromaufwärts des Regenerators (1) mindestens teilweise zu verdampfen.

5. Vorrichtung nach einem der Ansprüche 1 bis 4, **dadurch gekennzeichnet, dass** die Vorrichtung Mittel zum plötzlichen Entspannen der Arbeitsflüssigkeit stromaufwärts der ersten Verdampfungsmittel umfasst, wobei eine Dampfphase der entspannten Arbeitsflüssigkeit durch die ersten Wiedereinleitungsmittel in die Turbine eingeleitet wird, und eine flüssige Phase der entspannten Arbeitsflüssigkeit wieder in einen Vorwärmer eingeleitet wird.

6. Vorrichtung nach einem der Ansprüche 1 bis 5, **dadurch gekennzeichnet, dass** sie Überhitzungsmittel (15) umfasst, die angepasst sind, um die Arbeitsflüssigkeit stromabwärts des ersten Verdampfers-Kondensators (2, 3, 4) erneut zu überhitzen.

7. Vorrichtung nach einem der Ansprüche 1 bis 6, **dadurch gekennzeichnet, dass** sie Mittel zum Reinigen (7) der getrennten wässrigen flüssigen Phase umfasst, die sich stromabwärts der Mittel zum Trennen (6) befinden.

8. Vorrichtung nach Anspruch 7, **dadurch gekennzeichnet, dass** die Mittel zum Reinigen (7) ein Filtersystem auf Aktivkohle und/oder ein System mit Ionentauscher-Harz, und/oder ein System zur Elektrodialyse umfassen.

9. Vorrichtung nach einem der Ansprüche 1 bis 8, **dadurch gekennzeichnet, dass**:
- die erste Turbine (14) einem geschlossenen Arbeitsflüssigkeitskreislauf (16) angehört, der vom Dampfkreislauf getrennt ist, wobei der Arbeitsflüssigkeitskreislauf (16) einen organischen Rankine Zyklus bildet, und
- die Vorrichtung zweite Wiedereinleitungsmittel (17) der Regenerationsflüssigkeit umfasst, die im Bereich eines Kessels (18) von dem Dampfkreislauf getrennt ist.

10. Vorrichtung nach einem der Ansprüche 1 bis 9, **dadurch gekennzeichnet, dass** der erste Verdampfer-Kondensator (2, 3, 4) oder der zweite Verdampfer-Kondensator eine Säule ist, die die Flüssigkeit der ersten Kondensationsmittel und die Flüssigkeit der ersten Verdampfungsmittel direkt in Kontakt bringt.

11. Heizkraftwerk, das einen Dampfkreislauf und einen Kessel beinhaltet, **dadurch gekennzeichnet, dass** es eine Vorrichtung nach einem der vorstehenden Ansprüche umfasst.

12. Verfahren zum Abscheiden von in Abgasen eines Heizkraftwerks enthaltenem saurem Gas, einen Dampfkreislauf umfassend, wobei das Verfahren anhand einer Vorrichtung nach einem der Ansprüche 1 bis 10, umgesetzt wird, wobei das Verfahren die Schritte umfasst, bestehend aus:
- dem chemischen Absorbieren (701) des sauren Gases durch in-Kontakt-bringen der Abgase mit einer an saurem Gas armen Abscheideflüssigkeit,
- dem Regenerieren (702) der Abscheideflüssigkeit durch in-Kontakt-bringen der mit saurem Gas angereicherten Abscheideflüssigkeit und des Dampfes einer Regenerationsflüssigkeit, der eingeleitet wird, um die Abscheideflüssigkeit zu regenerieren,
- dem Einleiten (703) des Dampfes der Regenrationsflüssigkeit,
- dem Kondensieren (704) eines Milieus, das Regenrationsflüssigkeit und saure Gase nach der Regeneration (702) enthält, in einem Milieu, das eine flüssige Phase der Regenrationsflüssigkeit und eine mit saurem Gas angereicherte gasförmige Phase enthält,
- dem Trennen (705) der flüssigen Phase von der Regenerationsflüssigkeit und der mit saurem Gas angereicherten gasförmigen Phase, wobei
- die Kondensation (704) im Wärmeaustausch mit einer Verdampfung (706) einer Turbinenarbeitsflüssigkeit erfolgt, und
- das Verfahren weiter das Wiedereinleiten (707) in eine erste Turbine des durch Verdampfen erhaltenen Dampfes der Arbeitsflüssigkeit umfasst,
**dadurch gekennzeichnet, dass**:
- der eingeleitete Dampf der Regenerationsflüssigkeit zum Regenerieren der Abscheideflüssigkeit überhitzter Dampf ist,
- das Regenerieren (702) eine Begrenzung der Kontaktzeit zwischen der mit saurem Gas angereicherten Abscheideflüssigkeit und dem Dampf der Regenerationsflüssigkeit derart umfasst, dass im Wesentlichen der Dampfdurchsatz der Regenerationsflüssigkeit beibehalten wird, und,
wobei das Einleiten (703) des Dampfes der Regenerationsflüssigkeit das Einleiten des Dampfes ist aus:
- der ersten Turbine (14), wobei die erste Turbine (14) eine Turbine des Dampfkreislaufs ist, oder
- einer zweiten Turbine (110), wobei die zweite Turbine (110) eine Turbine des Dampfkreislaufs ist.

## Claims

1. Device for capturing an acid gas contained in the combustion fumes of a thermal power plant comprising a steam circuit, the device comprising:
- means (10) for absorbing the acid gas by bringing the fumes into contact with a capture fluid which is poor in acid gas,
- a regenerator (1) in which the acid gas-enriched capture fluid and steam from a regeneration fluid are brought into contact in order to regenerate the capture fluid,
- first means (11) for introducing the steam of the regeneration fluid into the regenerator (1),
- first means for condensing (2, 3, 4) into a medium containing a liquid phase of the regeneration fluid and a gaseous phase rich in acid gas, arranged at the top of said regenerator (1),
- means for separating (6) the liquid phase of the regeneration fluid from the acid gas-rich gas phase, wherein
- the first condensation means (2, 3, 4) are means of a first evapo-condenser and are in heat exchange with first evaporation means of the first evapo-condenser, which evaporate a working fluid, and
- the device comprises first reintroduction means (13, 16) of the the working fluid steam thus obtained into a first turbine (14),
**characterized in that**:
- the regeneration fluid steam introduced in order to regenerate the capture fluid is a superheated steam,
- the regenerator (1) comprises contact means between the acid gas enriched capture fluid and the superheated steam of the regeneration fluid, limiting the contact time between the two so that the steam flow rate of the regeneration fluid is substantially maintained, and
wherein the first regeneration fluid steam introduction means (11) are first means for introducing steam from:
- the first turbine (14), the first turbine (14) being a turbine of said steam circuit or
- a second turbine (110), the second turbine (110) being a turbine of said steam circuit.

2. The device according to claim 1, **characterized in that** the absorption means (10) are adapted to:
- evaporate an excess of regeneration fluid present in the capture fluid, and
- mixing said excess of evaporated regeneration fluid with the liquid phase of the regeneration fluid downstream of the first condensation means (2, 3, 4).

3. Device according to any one of claims 1 or 2, **characterized in that** the first condensing means (2, 3, 4) comprise partial condensers adapted to limit the proportion of impurities in the liquid phase of regeneration fluid condensed by the first condensing means (2, 3, 4), at least a liquid portion of regeneration fluid partially condensed by a partial condenser (3) being recycled to the regenerator.

4. Device according to any one of claims 1 to 3, comprising means for compressing (8) the acid gas-rich gas phase, in heat exchange with the first evapo-condenser (2, 3, 4) in order to:
- at least partially evaporate the working fluid, and/or
- at least partially evaporate the regeneration fluid upstream of the regenerator (1).

5. Device according to any one of claims 1 to 4, **characterized in that** the device comprises means for sudden expansion of the working fluid upstream of the first evaporation means, a vapor phase of the expanded working fluid being introduced into the turbine by the first reintroduction means, and a liquid phase of the expanded working fluid being reintroduced into a preheating train.

6. Device according to any one of claims 1 to 5, **characterized in that** it comprises superheating means (15) adapted to reheat the working fluid downstream of the first evapo-condenser (2, 3, 4).

7. Device according to any one of claims 1 to 6, **characterized in that** it comprises purification means (7) of the separated aqueous liquid phase, located downstream of the separation means (6).

8. The device according to claim 7, **characterized in that** the purification means (7) comprise an activated carbon filtration system and/or an ion exchange resin system, and/or an electrodialysis system.

9. Device according to any of the claims 1 to 8, **characterized in that**:
- the first turbine (14) belongs to a closed working fluid circuit (16) separate from the steam circuit, the working fluid circuit (16) forming an organic Rankine cycle, and
- the device comprises second reintroduction means for reintroducing (17) the separated regeneration fluid at a boiler (18) of the steam circuit.

10. The device of any one of claims 1 to 9, **characterized in that** the first evapo-condenser (2, 3, 4) or the second evapo-condenser is a column directly contacting the fluid of the first condensing means and the fluid of the first evaporating means.

11. Thermal power plant comprising a steam circuit and a boiler, **characterized in that** it comprises a device according to one of the preceding claims.

12. Method of capturing an acid gas contained in combustion fumes of a thermal power plant comprising a steam circuit, the method being implemented by means of the device according to one of claims 1 to 10, the method comprising steps consisting of:
- chemical absorption (701) of the acid gas by bringing the fumes into contact with a capture fluid which is poor in acid gas,
- regenerating (702) the capture fluid by contacting the acid gas-enriched capture fluid with steam of a regeneration fluid introduced to regenerate the capture fluid,
- introducing (703) the steam of the regeneration fluid,
- condensing (704) a medium containing regeneration fluid and acid gas after the regeneration (702) into a medium containing a liquid phase of the regeneration fluid and a gas phase rich in acid gas,
- separating (705) the liquid phase of the regeneration fluid from the acid gas rich gas phase, wherein
- the condensation (704) is performed in heat exchange with an evaporation (706) of a turbine working fluid, and
- the method further comprises reintroducing (707) into a first turbine the working fluid steam obtained by evaporation,
**characterized in that** :
- the regeneration fluid steam introduced to regenerate the capture fluid is a superheated steam,
- the regeneration (702) comprises limiting the contact time between the acid gas enriched capture fluid and the regeneration fluid steam such that the regeneration fluid steam flow rate is substantially maintained,
wherein the introduction (703) of the regeneration fluid steam is the introduction of the steam from:
- the first turbine (14), the first turbine (14) being a turbine of said steam circuit, or
- a second turbine (110), the second turbine (110) being a turbine of said steam circuit.
